# FASCICULE DE BREVET EUROPEEN

(11) **EP 1 215 109 B1**
(45) Date de publication et mention de la délivrance du brevet: **23.08.2006**
(21) Numéro de dépôt: 01870271.2
(22) Date de dépôt: 05.12.2001
(51) Int. Cl.: B62D 53/06

(54) **Semi-remorques et leur procédé de fabrication**
Sattelauflieger und Herstellverfahren dafür
Semi-trailers and method of fabrication therefor

(30) Priorité: 15.12.2000 BE 200000793
(43) Date de publication de la demande: 19.06.2002
(73) Titulaire: Faymonville, Yves, 4761 Rocherath 90 (BE); Faymonville, Alain, 4761 Rocherath 118 (BE)
(72) Inventeur: Faymonville, Yves, 4761 Rocherath 90 (BE); Faymonville, Alain, 4761 Rocherath 118 (BE)
(74) Mandataire: pronovem

(56) Documents cités:
- EP-A- 0 481 928
- WO-A-00/38970
- CA-A- 2 088 223
- GB-A- 2 158 025
- US-A- 4 262 923
- US-A- 4 832 358

## Description

### Objet de l'invention

La présente invention concerne des semi-remorques avec col de cygne fixé de manière amovible au châssis surbaissé, la hauteur d'attelage et la position du pivot d'attelage du col de cygne restant adaptables.

La présente invention divulgué également un procédé de fabrication amélioré pour de telles semi-remorques.

### Arrière-plan technologique

Certaines semi-remorques, en particulier celles à plateau surbaissé, destinées à être accouplées à un véhicule tracteur sont essentiellement constituées d'un élément qualifié de col de cygne, destiné à s'articuler sur la sellette d'un véhicule tracteur, et d'un châssis sur lequel sont montées à l'arrière un ou plusieurs essieux porteurs. Ces essieux peuvent être directionnels, auto-vireurs ou fixes.

Le châssis qui supporte la plate-forme de chargement peut être un châssis central (médian), relié à un cadre externe par des traverses, ou constitué par deux poutrelles longitudinales extérieures, liées ou non par des entretoises.

L'invention s'adresse à ces deux types de châssis.

Dans la publication WO 00/38970 (Müller Kaltbach), on décrit un châssis de semi-remorque en deux parties comportant un élément d'accouplage qui est mobile dans une direction longitudinale par rapport au châssis. De même, le train d'essieux à l'arrière de la semi-remorque peut être déplacé longitudinalement par rapport au châssis de façon télescopique. Le nombre d'essieux peut être adapté aux charges à transporter. Les poutres peuvent être renforcées par des inserts métalliques pour augmenter la rigidité et la portée du châssis. Il est néanmoins peu vraisemblable qu'une telle structure réalisée par principe d'assemblage offre une rigidité suffisante pour répondre aux normes internationales en matière de transport par semi-remorques surbaissées. Ce document ne mentionne d'ailleurs pas la présence d'un col de cygne.

Le document US-A 4262923 (WEIR), suivant les caractéristiques du préambule de la revendication 1, décrit une semi-remorque comportant un col de cygne pour assurer la liaison avec la sellette du véhicule tracteur facilement adaptable à diverses configurations. La construction et le type d'assemblage des différents éléments ne sont cependant pas décrits.

La construction de semi-remorques et en particulier l'assemblage du col de cygne au châssis se réalise habituellement par soudage en atelier dans une ligne de montage.

Par suite de la longueur de la semi-remorque, les lignes de montage sont nécessairement longues et l'encombrement même de la semi-remorque au cours du montage rend difficile sa manipulation.

D'autres difficultés apparaissent lors des réparations et rénovations des semi-remorques. La durée moyenne de vie des semi-remorques est généralement très supérieure à celle des camions-tracteurs. Les tracteurs eux-mêmes évoluent avec le temps et les progrès technologiques et notamment la hauteur de la sellette sur laquelle s'articule la semi-remorque peut varier, de même que la position géométrique de l'axe de pivotement. La conception même du système d'articulation est également en évolution constante. On cherche, notamment pour une longueur hors tout constante de l'ensemble tracteur/semi-remorque à réduire le rayon de pivotement pour accroître la longueur utile pour le chargement.

Par suite des sollicitations, accidents ou modifications du tracteur, il se produit fréquemment que le col de cygne doive être remplacé, sans que le châssis à proprement parler de la semi-remorque doive être fondamentalement révisé.

Dans la pratique, compte tenu de la difficulté à modifier le col de cygne qui implique une découpe au chalumeau et le soudage d'un nouveau col de cygne selon des normes techniques strictes, c'est souvent l'ensemble de la semi-remorque qui est déclassé lorsque des modifications ou adaptations doivent y être apportées.

### Buts de l'invention

L'invention vise à éviter les inconvénients précités des solutions de l'état de la technique, tant lors du montage que lors de réparations ultérieures et à fournir un moyen simple et économique pour ajuster la hauteur d'un col de cygne et le rayon de pivotement d'une semi-remorque.

### Eléments caractéristiques de l'invention

La présente invention a pour objet de proposer une semi-remorque à plateau surbaissé équipée d'un col de cygne pour l'articulation sur la sellette d'un véhicule tracteur caractérisé en ce qu'un élément intermédiaire de dimension adaptable et fixé par des éléments amovibles, de préférence des boulons, permettant par sa longueur adaptable, d'adapter le col de cygne à une hauteur de sellette différente.

La configuration boulonnée de la traverse reprenant le pivot d'attelage permet de modifier le rayon de pivotement de la semi-remorque.

Une caractéristique particulière de l'invention consiste en ce que la semi-remorque comprend des poutrelles longitudinales extérieures liées ou non par des entretoises.

Un autre objectif de l'invention consiste à proposer un procédé de montage d'une semi-remorque, caractérisée en ce que le col de cygne et le châssis de la plate-forme de chargement, sont montés séparément en atelier sur deux lignes de montage séparées et sont assemblés de manière démontable l'un à l'autre en fin de montage.

Par un assemblage démontable à l'aide de fixations amovibles il faut entendre essentiellement un assemblage à l'aide de boulons mais aucun autre moyen amovible n'étant exclu.

Le col de cygne étant lui-même formé par un cadre constitué de poutrelles pour sa partie formant le plateau, et également d'un cadre pour le prolongement vertical arrière, ces deux cadres constitutifs du col de cygne peuvent être eux-mêmes assemblés de manière démontable avec des éléments de fixations amovibles.

On conçoit donc qu'au niveau de la construction en atelier, le montage séparé des parties constitutives et leur assemblage final par boulonnage entraîne un gain tant au niveau encombrement qu'au niveau vitesse de production et facilité de fabrication.

Cet avantage apparaît également lors de la modification, rénovation ou réparation puisqu'il suffit de démonter le col de cygne du châssis pour traiter séparément les deux parties constitutives.

A condition de respecter les valeurs de résistance mécaniques initiales lors du remontage, on peut répondre ainsi aux conditions de sécurité sans s'exposer aux aléas d'une découpe au chalumeau et d'un nouveau soudage.

Lors d'une rénovation, il est également possible, si l'on souhaite, de modifier le rayon de pivotement dans certaines limites et/ou d'adapter le col de cygne à une hauteur de sellette différente.

D'autres avantages et caractéristiques de l'invention apparaîtront à la lecture d'une forme d'exécution préférée de l'invention, décrite en référence aux dessins annexés, donnés uniquement à titre d'illustration sans caractère limitatif.

### Description des figures

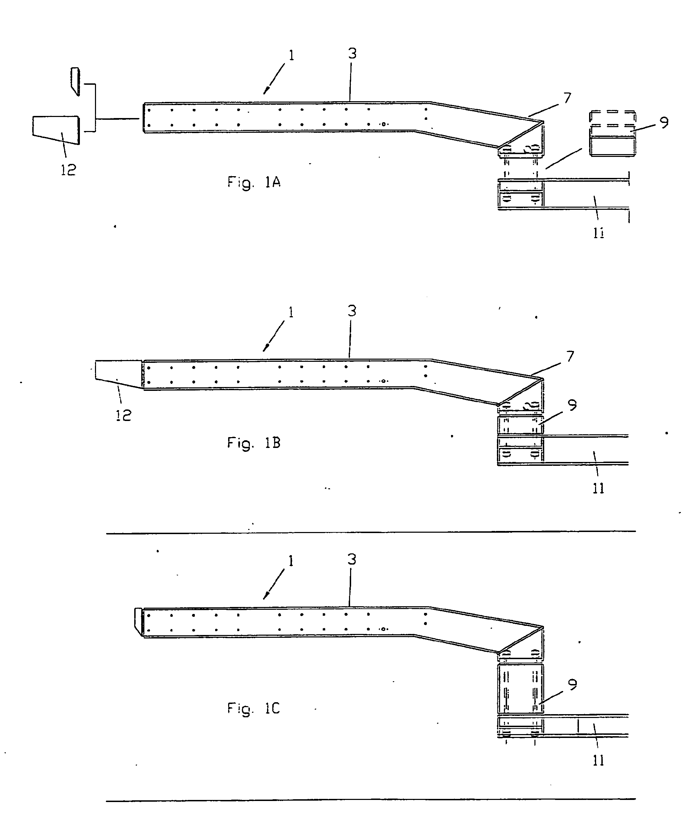

La figure 1A représente une vue schématique de côté d'un col de cygne adaptable pour différentes hauteurs de sellettes et différentes longueurs hors tout.

La figure 1B représente le montage pour une première hauteur et la figure 1C pour une deuxième hauteur, supérieure à la première.

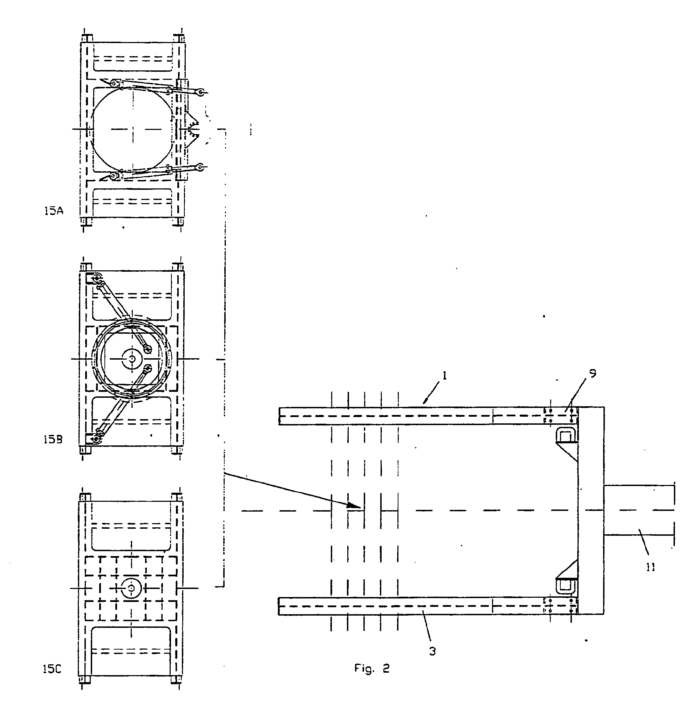

La figure 2 représente une vue en plan d'un châssis formant plateau du col de cygne avec illustration de trois types de sellettes qu'il est apte à recevoir, à savoir une sellette pour direction forcée réglable (15A), pour direction forcée non réglable (15B) et pour semi-remorque à essieux fixes ou auto-vireurs (15C).

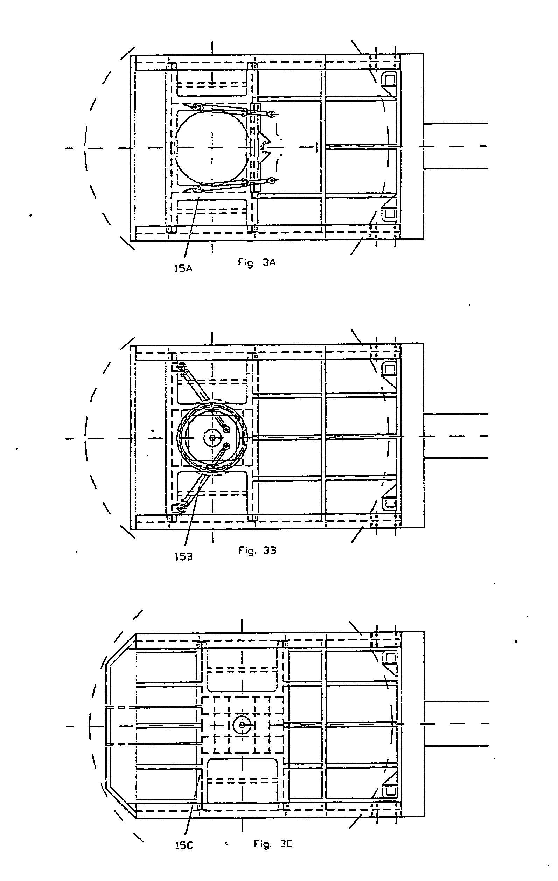

Les figures 3A, 3B et 3C représentent des vues agrandies des différents types de sellettes en position montée.

Des repères de référence identiques sont utilisés dans les différentes figures pour des éléments constitutifs identiques ou similaires.

### Forme d'exécution préférée de l'invention

Le col de cygne identifié par le repère général 1 est constitué d'une part par un plateau 3 horizontal recevant la sellette 15 et, généralement, il comporte sur sa partie arrière une rampe 7 et, d'autre part par une partie verticale 9 reliée à la plate-forme de chargement. Un élément porte à faux 12 permet également d'adapter la longueur de l'ensemble du col de cygne. Cette modification aura également un effet sur le rayon de braquage de la semi-remorque.

Ainsi qu'il est indiqué, la partie 9 est fixée de manière amovible, de préférence par des boulons au plateau 3 qui est fixé de la même manière à la plate-forme de chargement 11 de la semi-remorque surbaissée et devient ainsi une pièce de liaison avec une dimension adaptable.

Comme l'indique le dessin, cette partie verticale peut être constituée par trois éléments boulonnés entre eux, l'adaptabilité à différentes hauteurs de sellette étant réalisée par une longueur adaptable de la partie intermédiaire 9. Par ailleurs les diverses positions de fixation de la traverse 15 reprenant le pivot d'attelage permettent d'adapter le rayon de pivotement ou de braquage de la semi-remorque en repositionnant celle-ci sur les poutrelles longitudinales (1,3).

Sur la partie 3 formant le plateau, on peut fixer les trois types de sellettes tels qu'illustrés par les repères 15A, 15B et 15C.

Bien entendu, dans la description qui précède, les assemblages décrits comme réalisés par des boulons peuvent être également assemblés par tout autre élément de fixation amovible ou éventuellement des rivets calculés pour assurer la résistance nécessaire.

## Revendications

1. Semi-remorque à plateau surbaissé (11) équipée d'un col de cygne pour l'articulation sur la sellette d'un véhicule tracteur, **caractérisée en ce qu'**un élément intermédiaire (9) de dimension adaptable et fixé par des éléments amovibles, de préférence des boulons, permet par sa longueur adaptable d'adapter le col de cygne à une hauteur de sellette différente.

2. Semi-remorque selon la revendication 1, **caractérisée en ce qu'**elle comprend des poutrelles longitudinales extérieures (1,3) liées ou non par des entretoises.

3. Semi-remorque selon la revendication 1 comprenant au moins une traverse reprenant le pivot d'attelage, **caractérisée en ce que** le repositionnement de ladite traverse permet de modifier le rayon de pivotement de la semi-remorque.

4. Procédé de montage d'une semi-remorque, **caractérisé en ce que** le col de cygne et le châssis (11) de la plate-forme de chargement sont montés séparément en atelier sur deux lignes de montage séparées et sont boulonnés ou rivetés l'un à l'autre en fin de montage par l'intermédiaire de la partie verticale du col de cygne constituée par un premier élément soudé au plateau horizontal dudit col, par un élément intermédiaire à dimension adaptable (9) fixé par des éléments amovibles, de préférence boulonné, à ce premier élément à une extrémité et fixé par des éléments amovibles, de préférence boulonné, à l'autre extrémité à un troisième élément, lui-même soudé au châssis de la plate-forme de chargement.

5. Procédé selon la revendication 4, **caractérisé en ce que** le col de cygne est lui-même formé par un cadre constitué par des poutrelles pour sa partie formant le plateau et également par un cadre pour le prolongement vertical arrière, et **en ce que** ces deux cadres constitutifs du col de cygne sont assemblés en fin de montage.

6. Procédé selon la revendication 4, **caractérisé en ce que** la partie verticale du col de cygne est constituée par des pièces boulonnées entre elles.

7. Semi-remorque à plateau surbaissé équipée d'un col de cygne pour l'articulation sur la sellette d'un véhicule tracteur, **caractérisée en ce qu'**elle est obtenue par le procédé d'une des revendications 4 à 6 précédentes.

## Claims

1. Semi-trailer with a lowered bed (11) provided with a gooseneck for coupling to the fifth wheel of a towing vehicle, **characterised in that** an intermediate element (9) of adjustable size and attached by removable elements, preferably bolts, allows to adapt the gooseneck to a fifth wheel of a different height thanks to its adjustable length.

2. Semi-trailer according to Claim 1, **characterised in that** it comprises external longitudinal beams (1,3) connected or not connected by spacebars.

3. Semi-trailer according to Claim 1 comprising at least one apron to take the kingpin, **characterised in that** the repositioning of said apron allows to modify the pivoting range of the semi-trailer.

4. Method for assembling a semi-trailer, **characterised in that** the gooseneck and the chassis (11) of the loading platform are assembled separately in the factory on two separate assembly lines and are bolted or riveted together at the end of the assembly process by the vertical part of the gooseneck comprising a first element welded to the horizontal bed of said neck, by an intermediate element of adjustable size (9) attached by removable elements, preferably bolted, to this first element at one end and attached by removable elements, preferably bolted, at the other end to a third element, itself welded to the chassis of the loading platform.

5. Method according to Claim 4, **characterised in that** the gooseneck is itself formed by a frame comprising beams for its part forming the bed and also by a frame for the rear vertical extension, and **in that** these two frames making up the gooseneck are assembled at the end of the assembly process.

6. Method according to Claim 4, **characterised in that** the vertical part of the gooseneck is made of parts that are bolted together.

7. Semi-trailer with a lowered bed provided with a gooseneck for coupling to the fifth wheel of a towing vehicle, **characterised in that** it is produced by the method of one of the preceding claims 4 to 6.

## Patentansprüche

1. Satteltiefladeanhänger (11) mit Schwanenhals für die Schwenkbarkeit auf der Sattelkupplung einer Sattelzugmaschine, **dadurch gekennzeichnet, dass** ein mit lösbaren Elementen, vorzugsweise Bolzen, befestigtes Zwischenelement (9) von verstellbarer Größe durch seine verstellbare Länge die Anpassung des Schwanenhalses an unterschiedliche Aufsattelhöhen ermöglicht.

2. Sattelanhänger nach Anspruch 1, **dadurch gekennzeichnet, dass** er äußere Längsträger (1, 3) umfasst, die durch Querstreben verbunden sein können oder nicht.

3. Sattelanhänger nach Anspruch 1 mit mindestens einem Querträger, auf dem sich der Königszapfen befindet, **dadurch gekennzeichnet, dass** die Umstellung dieses Querträgers die Änderung des Schwenkradius des Sattelanhängers ermöglicht.

4. Montageverfahren für einen Sattelanhänger, **dadurch gekennzeichnet, dass** der Schwanenhals und das Fahrgestell (11) der Ladefläche im Werk getrennt auf zwei separaten Montagestraßen zusammengebaut werden und am Ende der Montage über den senkrechten Teil des Schwanenhalses, der aus einem ersten, an die waagrechte Platte dieses Schwanenhalses angeschweißten Elements besteht, mittels eines Zwischenelements verstellbarer Größe (9), das mit lösbaren Elementen, vorzugsweise Bolzen, an einem Ende dieses ersten Elements befestigt ist, und mit lösbaren Elementen, vorzugsweise Bolzen, am anderen Ende eines dritten Elements befestigt ist, das wiederum an das Fahrgestell der Ladefläche angeschweißt ist, zusammengeschraubt oder -genietet werden.

5. Verfahren nach Anspruch 4, **dadurch gekennzeichnet, dass** der Schwanenhals selbst durch einen Rahmen gebildet wird, dessen Teil, der die Platte bildet, aus Trägern besteht, und ebenfalls durch einen Rahmen für die senkrechte Verlängerung nach hinten, und dadurch, dass diese beiden, den Schwanenhals bildenden Rahmen am Ende der Montage zusammengebaut werden.

6. Verfahren nach Anspruch 4, **dadurch gekennzeichnet, dass** der senkrechte Teil des Schwanenhalses aus untereinander zusammengeschraubten Teilen gebildet wird.

7. Satteltiefladeanhänger mit Schwanenhals für die Schwenkbarkeit auf der Sattelkupplung einer Sattelzugmaschine, **dadurch gekennzeichnet, dass** er durch das Verfahren nach einem der vorstehenden Ansprüche 4 bis 6 montiert wird.
